(19) Europäisches Patentamt
European Patent Office
Office européen des brevets

(11) **EP 2 857 970 A1**

(12) **EUROPEAN PATENT APPLICATION**

(43) Date of publication:
**08.04.2015 Bulletin 2015/15**

(51) Int Cl.:
*G06F 9/50* (2006.01)   *H04L 29/08* (2006.01)

(21) Application number: **13306366.9**

(22) Date of filing: **02.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventor: **Acer, Utku**
**2018 Antwerpen (BE)**

(74) Representative: **Jacobs, Bart et al**
**Arnold & Siedsma**
**Bezuidenhoutseweg 57**
**2594 AC The Hague (NL)**

(54) **A method for selecting a plurality of components from among a plurality of resource pools**

(57)     The present invention is related to a method for selecting a plurality of components from among a plurality of resource pools to form an application that offers a service to a user.

The method comprises modeling the application by a directed acyclic graph (DAG) and serializing the DAG into a plurality of linear task chains (LTCs). The LTCs are then optimized successively by choosing the most suitable resource pool for a given component, taken into account the results of a previous LTC.

FIG. 2

EP 2 857 970 A1

**Description**

The present invention is related to a method for selecting a plurality of components from among a plurality of resource pools to form an application that offers a service to a user. Here, each resource pool comprises at least one instance of at least one component. An example of a resource pool is a datacenter running one or more virtual machines on which components can be instantiated.

In contrast to traditional cloud systems, distributed clouds are emerging that are composed of a large number of geographically distributed smaller data centers connected through a wide area network. This architecture may leverage the existing facilities such as central offices and place computation close to the user.

A typical application hosted on cloud is composed of multiple modular components each providing a separate service. However, the functionality of these components relies on each other because they need to communicate. A user flow essentially goes through several functions, effectively creating a service chain.

Since the application has to scale, each component has to be provided in multiple virtual machines (VM). When a new user requests service from the application, this request has to be matched with an instance of every component, which is referred to as "Service Routing".

The present invention particularly relates to a service selection or component selection problem for a multi-tier loosely coupled application in a distributed cloud. In such case, the application consists of multiple components that provide separate yet inter-dependent services.

It is assumed that the component instances are already placed. For each user request, an instance of every component must be selected from among the various datacenters that offer such component so that the user can receive service. This selection process is referred to as a service routing problem.

An objective of the present invention is to select component instances so that the cumulative cost of the service flow is minimized preferably while the ratio of the load processed at the pools for each component respects a desired distribution. This cost is associated with the amount of traffic exchanged with the component instances and the characteristics of the underlying cloud network.

This object can be achieved with the method as defined in claim 1.

According to the invention, the method comprises the steps of:

a) modeling the application by a directed acyclic graph (DAG);
b) serializing the DAG into a plurality of linear task chains (LTCs);
c) determining a LTC that does not have a resource pool allocated for each of its components;
d) determine a resource pool for each component in the determined LTC for which a resource pool was not yet allocated by optimizing performance of said determined LTC with respect to the resource pools that comprise at least one instance of said each component; and
e) repeating steps c)-d) until each of said plurality of components is allocated to a resource pool and forming the application using these components.

It should be noted that the datacenters can be selected based on known optimization algorithms. In most situations, an optimal solution can then be found. However, when applications scale and require a large number of components that are distributed over a plurality of datacenters, the problem becomes too complex to allow a suitable combination to be found sufficiently fast, at least to such extent that the user's experience is not adversely effected. According to the invention, a sub-optimal solution can be found more quickly. This is achieved by modeling the application as a DAG and subsequently extract and optimize LTCs in this DAG.

As an example, let the application be comprised of components a, b, c, d, and e. These components are offered by two resource pools d1 and d2, being datacenters that are geographically spaced apart. Datacenter d1 offers components a, b, and c, whereas datacenter d2 offers components b, c, d, and e.

The application is formed by combining components a-e in a specific manner. Concerning components b and c, a choice can be made regarding which datacenter to use.

In this example, component a receives input from the user, component c receives input from component a, and component d receives input from component c. Furthermore, component c receives input from component b, and component e receives input from component c.

In this example, two LTCs can be identified, i.e. b-c-e and a-c-d. For components a, d, and e no choice concerning datacenters has to be made as these components are offered only by a single datacenter. For components c en d such choice does exist. In short, two LTCs exist that each comprise components for which a choice regarding datacenters has not yet been made.

Starting with the LTC a-c-d, the resource pool for components c has to be determined. This can be achieved by analyzing the performance of the LTC as a function of the different resource pools. In this case, two combinations are possible, a(d1)-c(d1/d2)-d(d2), wherein () indicates the resource pool used. In the first case, the traffic between components a and c is contained in data center d1 and the traffic between c and d is transmitted from d1 to d2 over the cloud network. In the second scenario, the traffic between components a and c is exchanged between d1 and d2, whereas the traffic c and d is within datacenter d2. The best solution minimizes the cost of the traffic. The best choice in this case is determined by the amount of traffic exchanged between the components. Assume that the cost of traffic within a single data center is negligible. If the amount of traffic that is necessary to be exchanged between a and c instances is larger than the amount of traffic between c and d, the former is kept within the datacenter d1 causing low cost instead of costly inter-datacenter network links. Otherwise, if the traffic between c and d dominates the traffic between a and c, d2 is selected for component c. This is but one example how performance of a LTC can be determined. The skilled person is aware of different parameters or figures of merit which may be used in the algorithm.

Once, the best solution is determined, the resource pool that should provide component c is known. In this case, resource pool d2 is assumed to provide the best solution. Next, the LTC b-c-e is analyzed. In this case, component c has a known resource pool leaving only two possible LTCs b(d1/d2)-c(d2)-e(d2). By again analyzing the performance, a choice can be made for component b. Finally, each component is allocated to a resource pool and the distributed application can be formed.

Advantageously, step c) comprises determining the LTC with the longest path that does not have a resource pool allocated for each of its components. The longest path corresponds to the path for which the accumulated amount of traffic exchanged between vertices on that path is maximum. The weights correspond to the traffic exchanged between the components. The LTC with the longest path is normally the dominating factor in the overall performance of the application. By choosing the resource pools to optimize performance of this chain, the performance of the application is considerably improved.

Optimizing performance of a determined LTC with respect to the resource pools may comprise selecting components of those resource pools for which the LTC has the best performance in terms of cost of the service flow on the cloud network and the balance of the load for each component across resource pools.

Step e) may comprise taking into account the already determined resource pools for components when determining the resource pool for a component of a subsequent LTC for which a resource pool has not yet been allocated. For instance, in the example above, resource pool d2 was allocated for component c. For the analysis of the subsequent LTC, e.g. b-c-e, this fact can be taken into account. More in particular communication from and to component c can be specified in more detail as the properties of resource pool d2 can be taken into account.

Step d) may comprise using a shortest-path algorithm to determine a resource pool for said each component. An example of such algorithm is the well known Dijkstra's algorithm.

Step d) may comprise constructing a service routing graph. Such graph starts with an end user vertex and ends with an end vertex. The graph further comprises intermediate vertices that each correspond to a particular component from a particular resource pool. In addition, the graph comprises edges between the various vertices.

A path from the end user vertex to the end vertex via the edges corresponds to an implementation of the LTC. For example, service routing graph of the LTC a-c-d starts with the end user vertex. This vertex is connected to the vertex a(d1), i.e. component a offered by datacenter d1, via an edge. In turn, a(d1) is connected to c(d1) via an edge but also to c(d2) via a different edge. Both c(d1) and d(d2) are connected via individual edges to vertex d(d2). The latter is connected via an edge to the end vertex.

A weight is assigned to each edge that depends on the amount of traffic between the components corresponding to the vertices and on a cost function indicating a cost of traffic between resource pools. For instance, the weight between components a and b which exchange 10MB/s is higher than the weight between components b and c which exchange 5MB/s, assuming that b and c are offered by the same resource pool. However, if traffic occurs between different resource pools, a cost function is used to account for degrading effects such as network delay, packet loss, etc.

The last component in the LTC is connected to the end vertex by an edge having a constant weight, preferably 0. Moreover, the shortest path algorithm is used to determine the shortest path from the end user vertex to the end vertex.

The shortest path algorithm finds a path from the end user vertex to the end vertex with the lowest accumulated weight.

The weight may comprise a penalty function indicating when a load or load portion for a component in a resource pool deviates from a desired load or load portion for that component in that resource pool. Furthermore, the penalty function may be zero when the load or load portion is smaller than the desired load or load portion.

The penalty function may determine the load or load portion for a component in the resource pool using a current load or load portion in that resource pool for that component and the added load in that resource pool should that resource pool be allocated to said component.

A load portion may be defined as the load of a component in a resource pool compared to the combined load in that resource pool, i.e. the load of all components, or to the overall load in the network. The same holds for the desired load portion. This portion can also be component specific.

A particular component from a particular resource pool may be formed by a plurality of subcomponents from among a plurality of subordinate resource pools comprised by said particular resource pool. For instance, in the example above, component c may be formed by a combination of subcomponents c1, c2, c3, c4, c5 which may each be offered by a given subordinate resource pool, such as d1_1 and d1_2. Hence, each subordinate resource pool comprises at least one instance of at least one of the subcomponents. In this case, the method may further comprise a method for selecting a plurality of subcomponents from among said plurality of subordinate resource pools to form said particular component in accordance with the method as defined in any of the previous claims.

In the example, c1, c2, c3, c4, and c5 for instance correspond to components a, b, c, d, and e, which are provided by two subordinate resource pools d1_1 and d1_2. Accordingly, the method as described above can be used to find a suboptimal solution of allocating subordinate resource pools to subcomponents.

This type of hierarchical optimization can be repeated indefinitely if needed.

According to a second aspect, the present invention provides a storage medium comprising computer readable instructions, which, when performed by a computer, implements the method as described above.

Next, the invention will be described in more detail using the appended drawings, wherein:

Figures 1A and 1B illustrate an example of a DAG and its intended load distribution, respectively;
Figure 2 shows a service routing graph corresponding to the application of figure 1A; and
Figure 3 is an example of a DAG of a further application.

To describe the invention, assume that a cloud application is modeled using a graph $G = (V,E)$, wherein V is the set of the vertices and E is the set of edges. The vertices of this application graph correspond to the application components. If an edge $e = (v_i, v_j)$ exists between the vertices that corresponds to components $v_i$ and $v_j$, it means that two components interact with each other for the service delivery of the application. These components may each by offered by one or more datacenters $d$. Here, $(v_i, d_k)$ and $(v_j, d_m)$ indicate that components $v_i$ and $v_j$ are provided by datacenters $d_k$ and $d_m$, respectively.

The weight of the edge $e$ can be computed using $w(e)$, which represents the amount of traffic between $v_i$ and $v_j$ for a unit service demand, and $c(d_l, d_m)$ representing the cost for that traffic. In reality, the traffic between two components can be bi-directional. However, it is assumed that the edges are unidirectional and that the weight of the link includes the amount of traffic in both directions.

The directions of the edges are selected so that the resulting graph is a directed acyclic graph (DAG). In the model, there is also a vertex that corresponds to the end user. This vertex is described by $v_0$.

The DAG is constructed so that $v_0$ has no incoming edges but only outgoing edges. Knowledge of cloud locations, i.e. data centers, central offices, regional offices etc., is available. This knowledge includes the portion of load for each component that VMs in each location have to process and the cost of unit traffic from one location to the other.

Let $D$ be the set of data centers with the total number of datacenters equal to $N$. Also, let $d_i, d_j \in D$ be two data centers. The cost of unit traffic between them is given by $c(d_i, d_j)$. $C \in \mathrm{R}^{N \times N}$ represents the cost matrix for data centers, i.e. $C_{ij} = c(d_i, d_j)$. $\Omega_v(d)$ corresponds to the desired portion of load for component $v$ in data center $d$. $\Omega_v \in \mathrm{N}$ is the vector representation for the desired load values across data centers.

The service requests to the system are indexed by $l$. Each request is associated with the amount of service demand $\lambda^l$ and a set of time slots $T(l)$ during which it receives service. $L(l) = |T(l)|$ represents the total number of time slots for request $l$.

For each request $l$, the service routing problem is defined by finding the location of an instance that provides the service for each component $v$.

Given the complete information about every request $\lambda$ and the corresponding $T(l)$ intervals, the global service routing problem is formulated as follows:

$$\min \sum_l \sum_{e=(v_i,v_j)\in E} \lambda^l w(e) [X_{v_i}^l]^T C X_{v_j}^l$$

(equation 1)

where $X_v^l$ is a vector of length $N$. Only one entry in $X_v^l$ is equal to 1 and all the other entries equal 0. The index of the entry 1 yield data center that the VM for component $v$ is located for request l. For each request, the cost of service flow is the sum of cost of traffic between the selected component instances. In other words, for each $e = (v_i, v_j) \in E$, the weight of each edge is determined by multiplying the cost of the unit traffic between the selected location of $v_i$ and $v_j$ by $w(e)$,

which is the amount of traffic between $v_i$ and $v_j$ per unit demand and $\lambda^l$, i.e. amount of demand from $\lambda$.

The constraints for the problem are following:

$$\Omega_v^T X_v^l > 0 \qquad \forall v, l \qquad (2)$$

$$1_N^T X_v^l = 1 \qquad \forall v, l \qquad (3)$$

$$\left\| \sum_{l:T(l)\ni t} \lambda^l \left( X_v^l - \Omega_v \right) \right\| \le \epsilon \qquad \forall v, t \qquad (4)$$

$$X_v^l[d] \in \{0, 1\} \qquad \forall v, d, l \qquad (5)$$

(equations 2-5)

where $1_N$ is a vector of all 1 of length $N$. We have $1^T_N \Omega_v = 1$ as all the load has to be distributed to the data centers. $\|.\|$ is a function that quantifies the difference between the input vector from the vector of the same size with all elements equal to 0. Hence, the second term of this objective will incur less cost as the resulting distribution gets closer to the desired distribution. Equation (2) ensures that a location is selected only if a VM is deployed there, and hence the desired distribution of load there is above 0. The constraint in equation (3) maintains that only one location is selected for each component $v$ and request $l$, whereas equation (4) maintains that the resulting distribution of the load to the data centers is within the error factor at all times. The elements of $X^l_v$ can only assume binary values as they describe whether a location is selected for component $v$ for request $l$ and this is given in equation (5), where it is noted that $X^l_v(d)$ is the d-th entry of the vector $X^l_v$.

Global service routing problem with complete information is hard to calculate with a computer program when the number of datacenters and application components is large. Besides, the complete information clearly cannot be used in practice since future information is not available as users arrive and leave the system one at a time continuously. Once a new request $l$ arrives at time $t$, the system has the following knowledge:

- The associated $\lambda^l$, but not $T(l)$
- Cost of unit traffic from the end user to the data centers
- The vector of $\phi_v(t)$ of length $N$ for each $v$ that gives the amount of load (not the portion) that data centers handle at time $t$.

In fact, it is possible that $\lambda^l$ values are also not known beforehand. In this case, each user request is treated equally with an amount of demand that is equal to 1. In this case, the amount of load that a data center handles for a component equals to the number of users that the corresponding component instances in that data center provides service. For the general case, it is assumed that this is not the case and each $l$ is treated with a different $\lambda^l$ value. Once a new request $l$ arrives, the optimum service route for $l$ is given by the following optimization problem:

$$\min \sum_{e=(v_i,v_j)\in E} \lambda^l w(e) [X_{v_i}^l]^T C X_{v_j}^l \qquad (6)$$

such that

$$\Omega_v^T X_v^l > 0 \qquad \forall v \qquad (7)$$

$$1_N^T X_v^l = 1 \qquad \forall v \qquad (8)$$

$$\left\| \Omega_v - \frac{\phi_v(t) + \lambda^l X_v^l}{\lambda^l + \Phi(t)} \right\| \le \epsilon \qquad \forall v \qquad (9)$$

$$X_v^l[d] \in \{0, 1\} \qquad \forall v, d \qquad (10)$$

equations (6-10)

where $\phi(t)$ is the sum of values in $\phi_v(t)$, i.e. sum of load processed in all data centers for a particular component. Note that the sum is equal for all $v \in V$. The constraints in equations (7,8,10) directly follow from their counterparts in the global service routing problem definition. In equation (9), the left hand side gives the deviation between the desired load distribution vector, $\Omega_v$, and the resulting load distribution once the service routing decision for $l$ is made for every $v$. This decision is given by $X_v^l$. This deviation should not be larger than a tolerance value $\epsilon$.

The complexity of this optimum online service routing problem is $O(N^{|V|})$ and can be solved with off-the-shelve optimization tools. However, the burden to solve this problem can be too high if the application consists of a large number of components.

The present invention provides a solution for this problem as will be elucidated next. The invention provides a sub-optimal algorithm that calculates the service routes for incoming request in much more effective way.

The online service routing algorithm according to the invention has two phases. The first phase, *get-LTC,* runs at the initiation and dissects or serializes the application graph into several linear task chains (LTC). The second phase, *route-LTC,* runs at the arrival of users and makes the service routing decisions for each LTC in sequence. The description of the second phase is described first.

A. *route-LTC* Phase

Assume that the application graph $G'=(V',E')$ is a linear task chain (LTC). A LTC is a special kind of DAG, wherein every vertex has at most one incoming edge an one outgoing edge. The only vertex that no incoming edge is the first vertex whereas only the last vertex has no outgoing edge.

Using $G'$, a service routing graph is built denoted by $H(G') = (\Psi, \Xi)$. Every vertex $\vartheta \in \Psi$ is a tuple $\vartheta = (v,d)$, wherein $v \in V'$ and $d$ is a data center with at least one instance of $v$. An edge $\xi \in \Xi$ exists such that $\xi = ((v_i,d_a),(v_j,d_b))$ only if $(v_i,v_j) \in E'$.

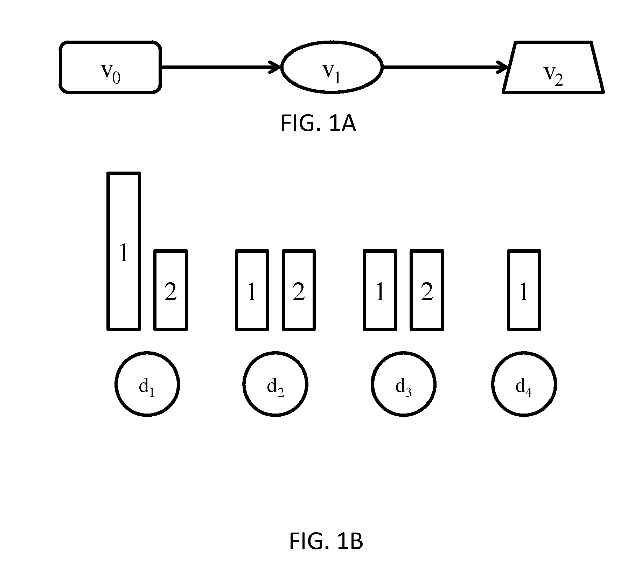

Now referring to the example scenario in Figures 1A and 1B. In this example, the application consists of two components $(v_1, v_2)$ and the user corresponds to $v_0$. Users are dealt with one by one, so there is a single user in each case and its location (and hence its cost to all the data centers) is known.

The cloud consists of four data centers in Figure 1B, namely $d_1$, $d_2$, $d_3$, $d_4$. The desired amount of load to be processed in each of these data centers is also shown in this figure.

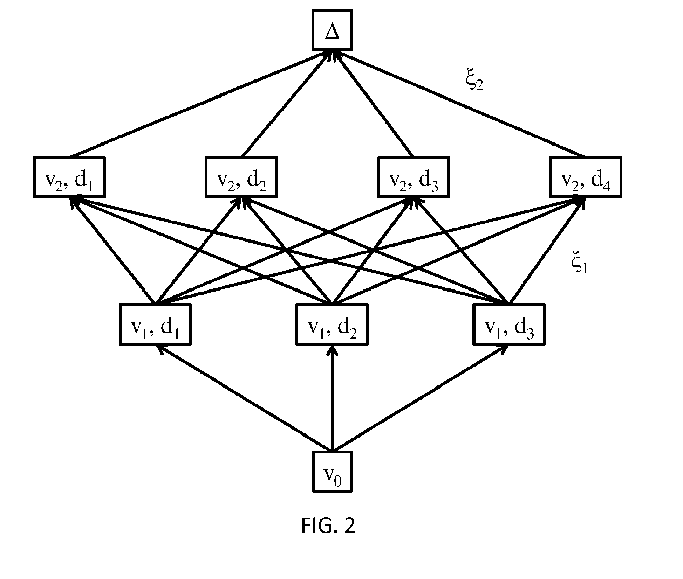

The corresponding service routing graph is constructed as shown in Figure 2. In this figure, the vertex labeled $\Delta$ is an auxiliary vertex and the weight of all the edges leading to it is equal to 0 (i.e. $\omega(\xi_2) = 0$ in the figure).

All the other weights reflect the amount of traffic, the communication cost of this traffic, and the deviation from the desired load balance. Take the weight $\omega(\xi_1)$ for edge $\xi_1$ (from $(v_1,d_3)$ to $(v_2,d_4)$) in Figure 2 for example. Its weight is given as below:

$$\omega(\xi_1) = \lambda^l w(v_1, v_2) c(d_3, d_4)$$
$$+ \frac{1}{2\mu} \left[ \frac{\phi_{v_2}(t)[4] + \lambda^l}{\lambda^l + \Phi(t)} - \Omega_{v_2}[4] - \epsilon \right]^+$$

equation 11.

where $x^+ = \max(0,x)$, $\phi_v(t)\,[d]$ is the d-th entry of the vector $\phi_v(t)$ and $\mu$ is the penalty parameter with $0 < \mu << 1$.

In equation (11), $\lambda^l w(v_1,v_2)c(d_3,d_4)$ corresponds to the cost of traffic associated with $l$ between the $v_1$ instance and $v_2$ instance if data center $d_3$ and $d_4$ are the selected locations for $v_1$ and $v_2$, respectively. The rest of the equation is related to the balance of the load. The numerator in the fraction corresponds to the amount of $v_2$ type load processed in data center 4 if the load $\lambda^l$ is associated with data center 4. The denominator on the other hand gives the total load once the $\lambda$ is admitted for service. So, the fraction gives the portion of $v_2$ type load processed in data center 4 if that data center is chosen as the location for $v_2$.

$\Omega_{v2}[4]$ is the desired portion of $v_2$ type load processed in data center 4. In other words, the edge weight will not comprise any penalty if the resulting distribution of $v_2$ type load in data center 4 is not more the desired distribution by an amount of $\epsilon$.

In the service routing graph, a path ($p$) from the vertex that corresponds to the end user ($v_0$ in Figure 2) and $\Delta$, is a sequence of vertices $v_i$. In all paths, there exists exactly one $v$ such that any component $v \in V'$ is seen.

The solution to the service routing is given by the shortest path. Each $v = (v,d)$ vertex in the shortest path of $G$ yield the service routing decisions, i.e. data center $d$ is selected for service $v$. In Figure 2 for example, the shortest path can be assumed to be $<v_0, (v_1,d_1), (v_2,d_2),\Delta>$. Then, using a $v_1$ type VM in data center $d_1$ and a $v_2$ type VM in data center $d_2$ minimizes the sum of the weights associated with the edges. This corresponds to the optimum solution indicated in equation (6) as well.

B. *get-LTC* Phase

It is likely that the application graph is more complex than a LTC. During the get-LTC phase the application graph is serialized into a series of LTCs on which route-LTC can run at every user arrival. To do this, we iteratively get the longest paths on the application graph $G$. *route-LTC* makes the optimal decisions for a LTC. However, the overall solution will be suboptimal.

It is desirable to make the optimal decisions for the longest path of the application graph as such path can dominate overall behavior.

Let $u$ be the component on $G$ that has the longest path from the client $v_0$ and let the path from $v_0$ to $u$ be denoted by $p_1$, which yields a LTC. We then build $H(p_1)$ using the components on $p_1$ and make service routing decision for these components using *route-LTC.* Then, the components in $p_1$ are added into an initially empty set $P$ that holds the components whose service routing decisions are done and continue by seeking the subsequent longest path $p_2$ that starts with a component in $P$ or the end user, and which comprises at least one component only in $V\backslash\{P\}$, wherein it is noted that the location of a component in $P$ has already been decided. Hence, the starting point for the new LTC is known but not the others. This LTC is used to construct $H(p_2)$.

When determining the weights of the edges of this service routing graph, the components in P are taken into account as well. Let $e=((v_1,d_1), (v_2,d_2))$ again denote an edge in $G(p_2)$. The original $G$ is inspected to see whether there exists any edge that is formed by $v_2$ and any vertex in $P$. If that is the case, the weight of e, which was initially calculated according to equation (11), is increased by:

$$\omega(\xi)+ = \sum_{v \in P} (w(v, v_2) + w(v_2, v)) c(\delta_v, d_2)$$

where $\delta_v$ is the location where the service for component $v$ is provided, a decision made at the previous step. This way, the edge weights in *G* graphs can include a larger number of edges in the application graph and not just those in the linear task chains. Once the shortest path found in *H* ($p_2$), the components in this graph are added to *P*. This procedure continues until the service routing decision for all the vertices in *V* are made and *P = V*.

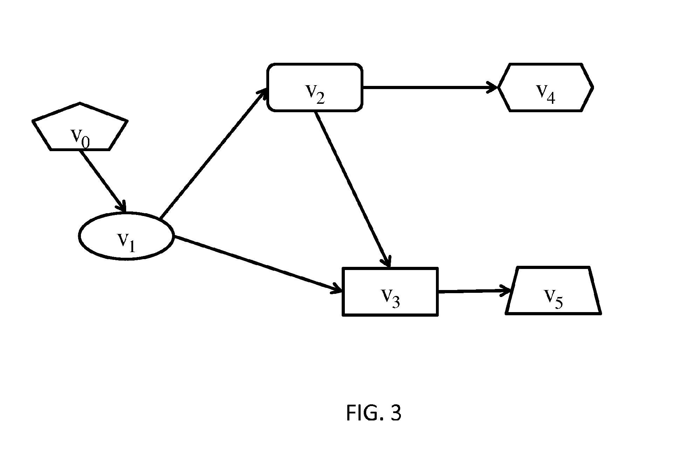

Now referring to the application graph depicted in Figure 3 as an example. In this figure, $v_0$ corresponds to the client and its location is known. Assume that the longest path on this application graph is the path $p_1 =<v0,v1,v3,v5>$. The second longest path is $p_2 =<v1,v2,v4>$. *route-LTC* first runs on $p_1$ to select locations for $v_1$, $v_3$ and $v_5$ and these components are added to *P*. Then, it proceeds to $p_2$. In this path, a component, $v_2$, forms an edge with another component in *P*, i.e. $v_3$. In G($p_2$), the weight of every vertex ($v_1,(v_2,d)$) is increased by an amount of $w(v_2,v_3)c(d,d_3)$, wherein $d_3$ is the selected location for $v_3$ and determined on the first time *route-LTC* runs.

It is possible to apply this algorithm in a data center by taking advantage of the common practice that cloud systems are divided into structural resource pools such as data centers, racks, etc. If the cloud architecture consists multiple layers resource pools, the algorithm according to the invention can be applied at each layer, going from the top to the bottom. For example, the service routing decisions at the data center layer are made first and then at the rack layer. At each level of resource pools, the load distribution is determined taking the output of the previous level as an input. This way, the application components no longer have to rely on placement unaware, round robin load balancers for service selection which can consume more bandwidth than it needs to.

The service routing problem in the level of data centers is solved first. For each request *I*, the data center $d_v$ for every component *v* is found as explained above. Let *p* be a LTC that the algorithm in the data center level has processed and let *p' = [$p_i$, $p_{i+1}$,..., $p_{i+k}$]* be an contiguous portion of *p* that the algorithm has distributed to the data center *d*. Then, the data center *d* builds a service routing graph for *p'*, G(*p'*), wherein the locations to be determined are now the racks in the data center. Here, two auxiliary vertices are added for $p_{i-1}$ and $p_{i+k+1}$ that act as the source and destination, respectively, for the shortest path on G(*p'*). The weights of the edges that leave $p_{i-1}$ and $p_{i+k+1}$ are set to 0 so that they have no affect on the routing decisions. In this manner, a hierarchical approach can be followed wherein at each level of hierarchy the routing decisions are made based on the algorithm of the present invention.

As shown above, the present invention describes an online service routing framework that optimizes the overall network distance travelled by the application flows while respecting load distribution constraints. In this context, each data center is provided with the maximum ratio of the load it can handle for each type of service. This may be tied to the number of VMs a data center hosts for each component. It should be noted however, that the invention is not limited to situations wherein the components are already provided by the resource pools. For instance, the selection process can be performed taking into account a virtual performance of a component as if it has already been instantiated. Once, a user initiates a request, and when the algorithm has determined that a particular non-instantiated component should be part of the routing, that component may be instantiated.

It should further be apparent to the skilled person that various modifications may well be possible compared to the embodiments shown above without departing from the scope of the invention, which is defined by the appended claims.

**Claims**

1. A method for selecting a plurality of components from among a plurality of resource pools to form an application that offers a service to a user, wherein each resource pool comprises at least one instance of at least one component, said method comprising:

   a) modeling the application by a directed acyclic graph (DAG);
   b) serializing the DAG into a plurality of linear task chains (LTCs);
   c) determining a LTC that does not have a resource pool allocated for each of its components;
   d) determine a resource pool for each component in the determined LTC for which a resource pool was not yet allocated by optimizing performance of said determined LTC with respect to the resource pools that comprise at least one instance of said each component;
   e) repeating steps c)-d) until each of said plurality of components is allocated to a resource pool and forming the application using these components.

2. The method according to claim 1, wherein step c) comprises determining the LTC with the longest path that does not have a resource pool allocated for each of its components.

3. The method according to claim 2, wherein the longest path is the path for which the accumulated amount of traffic exchanged between vertices on that path is maximum.

4. The method according to claim 1, wherein said optimizing performance of said determined LTC with respect to the resource pools comprises selecting components of those resource pools for which the LTC has the best performance in terms of network cost and balance of the load across resource pools for each component.

5. The method according to claims 2, 3, or 4, wherein step e) comprises taking into account the already determined resource pools for components when determining the resource pool for a component of a subsequent LTC for which a resource pool has not yet been allocated.

6. The method according to any of the previous claims, wherein step d) comprises using a shortest-path algorithm to determine a resource pool for said each component.

7. The method according to claim 6, wherein step d) comprises constructing a service routing graph that:

   starts with an end user vertex;
   ends with an end vertex;
   comprises intermediate vertices that each correspond to a particular component from a particular resource pool;
   comprises edges between the various vertices;
   wherein a path from the end user vertex to the end vertex via the edges corresponds to an implementation of said LTC;
   wherein a weight is assigned to each edge that depends on the amount of traffic between the components corresponding to the vertices and on a cost function indicating a cost of traffic between resource pools;
   wherein the last component in the LTC is connected to the end vertex by an edge having a constant weight, preferably 0;
   wherein the shortest path algorithm is used to determine the shortest path from the end user vertex to the end vertex.

8. The method according to claim 7, wherein the weight comprises a penalty function indicating when a load or load portion for a component in a resource pool deviates from a desired load or load portion for that component in that resource pool.

9. The method according to claim 8, wherein the penalty function is zero when the load or load portion is smaller than the desired load or load portion.

10. The method according the claim 8 or 9, wherein the penalty function determines the load or load portion for a component in the resource pool using a current load or load portion in that resource pool for that component and the added load in that resource pool should that resource pool be allocated to said component.

11. The method according to any of the previous claims, wherein the resource pool comprises a database and wherein said plurality of resource pools are geographically separated.

12. The method according to any of the previous claims 6-11, wherein the shortest path algorithm is Dijkstra's algorithm.

13. The method according to any of the previous claims, wherein a particular component from a particular resource pool is formed by a plurality of subcomponents from among a plurality of subordinate resource pools comprised by said particular resource pool, wherein each subordinate resource pool comprises at least one instance of at least one of said subcomponents, the method further comprising:

   a method for selecting a plurality of subcomponents from among said plurality of subordinate resource pools to form said particular component in accordance with the method as defined in any of the previous claims.

14. A storage medium comprising computer readable instructions, which, when performed by a computer, implements the method according to any of the previous claims.

$v_0$ → $v_1$ → $v_2$

FIG. 1A

FIG. 1B

FIG. 2

FIG. 3

Europäisches
Patentamt

European
Patent Office

Office européen
des brevets

# EUROPEAN SEARCH REPORT

Application Number

EP 13 30 6366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XIN ET AL: "QoS-Aware Service Selection in Geographically Distributed Clouds", 2013 22ND INTERNATIONAL CONFERENCE ON COMPUTER COMMUNICATION AND NETWORKS (ICCCN), IEEE, 30 July 2013 (2013-07-30), pages 1-5, XP032513109, DOI: 10.1109/ICCCN.2013.6614176 [retrieved on 2013-09-27] * page 2, left-hand column, line 15 - page 4, left-hand column, line 22 * ----- | 1-14 | INV. G06F9/50 H04L29/08 |
| X | WENZHONG LI ET AL: "A QoS-aware service selection algorithm for multimedia service overlay networks", PARALLEL AND DISTRIBUTED SYSTEMS, 2007 INTERNATIONAL CONFERENCE ON, IEEE, PISCATAWAY, NJ, USA, 5 December 2007 (2007-12-05), pages 1-8, XP031880906, DOI: 10.1109/ICPADS.2007.4447718 ISBN: 978-1-4244-1889-3 * page 1, right-hand column, line 17 - page 4, line 12, last paragraph * ----- | 1-14 | |
| X | YUQIANG LI ET AL: "Dijkstra Algorithm Implementing Services Composing Way Selection", INTELLIGENT SYSTEMS AND APPLICATIONS (ISA), 2010 2ND INTERNATIONAL WORKSHOP ON, IEEE, PISCATAWAY, NJ, USA, 22 May 2010 (2010-05-22), pages 1-4, XP031681634, ISBN: 978-1-4244-5872-1 * page bibl, right-hand column, line 1 - page 2, left-hand column, line 20 * ----- -/-- | 1-14 | TECHNICAL FIELDS SEARCHED (IPC) G06F H04L |

The present search report has been drawn up for all claims

| Place of search | Date of completion of the search | Examiner |
|---|---|---|
| The Hague | 5 March 2014 | Mühlenbrock, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 13 30 6366

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ATIF ALAMRI ET AL: "Classification of the state-of-the-art dynamic web services composition techniques", INTERNATIONAL JOURNAL OF WEB AND GRID SERVICES, vol. 2, no. 2, 1 January 2006 (2006-01-01), pages 148-166, XP055105465, ISSN: 1741-1106, DOI: 10.1504/IJWGS.2006.010805 * the whole document * ----- | 1-14 | |

TECHNICAL FIELDS
SEARCHED (IPC)

The present search report has been drawn up for all claims

| Place of search | Date of completion of the search | Examiner |
|---|---|---|
| The Hague | 5 March 2014 | Mühlenbrock, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)